(19) **Europäisches Patentamt**

**European Patent Office**

**Office européen des brevets**

(11) **EP 0 979 988 B1**

(12) **EUROPÄISCHE PATENTSCHRIFT**

(45) Veröffentlichungstag und Bekanntmachung des Hinweises auf die Patenterteilung:
**25.06.2003  Patentblatt 2003/26**

(51) Int Cl.⁷: **G01D 5/14**, G01D 5/16

(21) Anmeldenummer: **99115790.0**

(22) Anmeldetag: **11.08.1999**

(54) **Verfahren zur Erfassung linearer Relativbewegungen zwischen Dauermagneten und Sensoren**

Method of evaluating relative linear movements between permanent magnets and sensors

Procédé de mesure des mouvements linéaires entre aimants et capteurs

(84) Benannte Vertragsstaaten:
**DE FR GB IT**

(30) Priorität: **13.08.1998  DE 19836599**

(43) Veröffentlichungstag der Anmeldung:
**16.02.2000  Patentblatt 2000/07**

(73) Patentinhaber:
- **FESTO AG & Co**
  **73734 Esslingen (DE)**
- **Windhorst Beteiligungsgesellschaft mbH**
  **53119 Bonn 1 (DE)**

(72) Erfinder:
- **Grönefeld, Martin Dr.**
  **53119 Bonn (DE)**
- **Gerhartz, Jürgen**
  **73734 Esslingen (DE)**
- **Ohmer, Michael**
  **73240 Wendlingen (DE)**
- **Reininger, Thomas Dr.**
  **73249 Wernau (DE)**

(74) Vertreter: **Abel, Martin, Dipl.-Ing. et al**
**Patentanwälte**
**Magenbauer, Reimold, Vetter & Abel**
**Plochinger Strasse 109**
**73730 Esslingen (DE)**

(56) Entgegenhaltungen:
**EP-A- 0 810 420          DE-A- 4 341 810**
**DE-A- 19 600 616         US-A- 4 471 304**

- **DETTMANN F ET AL: "AUF MAGNET-BASIS UND DOCH HOCHGENAU. LANGENMESSUNG MIT MAGNETORESISTIVEN MIKROSYSTEMEN" ELEKTRONIK,DE,FRANZIS VERLAG GMBH. MUNCHEN, Bd. 44, Nr. 25, Seite 86-88,90-92 XP000550387 ISSN: 0013-5658**

**Beschreibung**

Die Erfindung betrifft Meßverfahren zur berührungslosen magnetischen Erfassung linearer Relativbewegungen zwischen Dauermagneten und elektronischen Sensoren nach den Oberbegriffen der Ansprüche 1 bzw. 12. Mit Hilfe dieser Verfahren sollen lineare Bewegungen berührungslos mittels magnetischer Wechselwirkung zwischen einem oder mehreren Permanentmagneten und magnetischen Sensoren erfaßt und ausgewertet werden.

Die Messung linearer Bewegungen findet zum Beispiel in Werkzeugmaschinen, in Pneumatik, in der Automatisierungstechnik und Robotronik sowie im Automobilbereich Anwendung. Eine berührungslose Erfassung von Bewegungen bietet den Vorteil der Verschleißfreiheit. Unter den berührungslosen Meßverfahren sind die optischen und magnetischen am weitesten verbreitet. Während die optischen Verfahren aufgrund der kleinen Wellenlänge des Lichtes eine sehr hohe Genauigkeit garantieren, sind magnetische Verfahren weit unempfindlicher gegen Verschmutzung und Beschädigung, insbesondere dadurch, daß Magnete und Sensoren in einer nichtmagnetischen Hülle vollständig gekapselt werden können (siehe z.B. Dettman F. et al. "Auf Magnet-Basis und doch hochgenau. Langenmessung mit magnetoresistiven Mikrosystemen", Elektronik, DE, Franzis Verlag GmbH, München Bd 44, Nr. 25, Seite 86-88, 90-92).

Bei den magnetischen Verfahren wird im allgemeinen ein mehrpoliger Magnetstreifen als Gebermagnet verwendet. Durch Erfassung der Polübergänge durch einen elektronischen Magnetfeldsensor wird eine Verschiebung incremental erfaßt, das heißt man erhält nach Auszählen der Nulldurchgänge ein digitales Signal. Als Sensoren werden beispielsweise Hall-Sensoren, magnetoresistive Elemente oder Schutzgasschalter bzw. Reed-Relais eingesetzt.

Bei den Verfahren mit mehrpoligen Magnetstreifen ist die Auflösung durch die Polbreite und diese wiederum durch den Abstand zwischen Sensor und Magnetstreifen begrenzt. Es gibt die Möglichkeit, die Auflösung zu erhöhen, indem die Höhe der Feldstärke zwischen den Polen ausgewertet und daraus die Lage zwischen zwei Poldurchgängen interpoliert wird. In der Nähe der Feldmaxima ist jedoch die Änderung der Feldstärke gering, so daß die Meßgenauigkeit hier beschränkt ist.

Ein anderes bekanntes Verfahren zur direkten analogen Messung der Verschiebung, bei dem das Meßsignal sich im Gegensatz zur Incrementalmessung kontinuierlich mit der Verschiebung ändert, besteht in der Vermessung der radialen Feldstärke neben einem axial magnetisierten Stabmagneten, bei dem der Sensor parallel zur Stabachse verschoben wird. Im Bereich zwischen den beiden Stabpolen variiert die gemessene Feldstärke kontinuierlich zwischen einem Maximum auf Höhe des Nordpoles und einem gleich starken aber im Vorzeichen umgekehrten Minimum auf Höhe des Südpoles. In diesem Bereich kann aus der gemessenen Feldstärke eindeutig auf die Position zurückgeschlossen werden. Dieses Meßverfahren hat zwei Einschränkungen, die die Genauigkeit und die Anwendbarkeit begrenzen. So wird zum einen die gemessene Feldstärke durch Temperaturschwankungen, Lagetoleranzen des Sensors in Bezug auf die Stabachse und Toleranzen des Sensors selber beeinflußt, was eine scheinbare Verschiebung vortäuscht. Zum zweiten ist der meßbare Bereich beschränkt auf den Übergang zwischen zwei Polen, da außerhalb dieses Bereiches eine Umkehrung der Flußrichtung entsteht, die eine mehrdeutige Zuordnung von Feldstärken zur Sensorposition bewirkt.

Der Erfindung liegt die Aufgabe zugrunde, Meßverfahren nach dem Oberbegriff des Anspruches 1 mit einer Magnet- und Sensoranordnung und Auswerteverfahren zu schaffen, mit denen Lageverschiebungen ohne die vorgenannten Einschränkungen in einfacher, zuverlässiger und genauer Weise detektiert werden können.

Diese Aufgabe wird gemäß der Erfindung in einer ersten Verfahrensvariante dadurch gelöst, daß zur Erfassung der linearen Relativbewegungen mittels der elektronischen Sensoren an einem Ort zwei zueinander senkrechtstehende Feldkomponenten erfaßt werden, deren Quotient zur Lageerkennung ausgewertet wird.

In einer zweiten Verfahrensvariante kann das erfindungsgemäße Meßverfahren auch so durchgeführt werden, daß zur Erfassung der linearen Relativbewegungen mittels der elektronischen Sensoren an zwei Orten zwei zueinander senkrechtstehende Feldkomponenten erfaßt werden, deren Quotient zur Lageerkennung ausgewertet wird.

Besonders vorteilhafte Weiterbildungen der erfindungsgemäßen Verfahren sind in den Ansprüchen 2 bis 11 bzw. 13 und 14 gekennzeichnet.

Mit den erfindungsgemäßen Meßverfahren werden an einem Ort zwei orthogonale Feldkomponenten detektiert, aus deren Verhältnis die Position zurückgerechnet wird. Dies hat den Vorteil, daß jeweils in Bereichen, wo eine Feldkomponente einen Extremalwert annimmt und daher kleine Verschiebungen nicht detektiert werden, die andere Feldkomponente auf Verschiebungen stark reagiert, so daß im ganzen Meßbereich eine gleich hohe Meßgenauigkeit gegeben ist.

Weiterhin sind diese erfindungsgemäßen Meßverfahren sehr viel unempfindlicher gegenüber einer Veränderung der absoluten magnetischen Feldstärke, da Verhältniszahlen zwischen den Feldkomponenten zur Positionserfassung genutzt werden.

Besonders vorteilhaft ist es dabei, wenn zur Signalgabe ein axial magnetisierter Stabmagnet verwendet wird, wobei mindestens zwei seitlich davon angeordnete Sensoren die radiale und die axiale Feldkomponente erfassen. Dabei kann zweckmäßig zur Signalgabe ein Dauermagnet aus einem AlNiCo-Werkstoff verwendet werden.

In einer demgegenüber abgewandelten Ausführungsform kann zur Signalgabe aber auch ein diametral schraubenlinienförmig magnetisierter Stabmagnet verwendet werden, wobei die seitlich davon angeordneten Sensoren die Feldkomponenten senkrecht zur Stabachse erfassen.

Besonders genaue Meßergebnisse können aber auch dadurch gewonnen werden, daß zur Signalgabe zwei diametral schraubenlinienförmig entgegengesetzt magnetisierte Stabmagnete verwendet werden, die in einer Ebene parallel zueinander angeordnet sind, über der die Sensoren die Feldkomponenten senkrecht zu den Stabachsen erfassen.

In einer demgegenüber vereinfachten Ausführungsform kann statt der beiden entgegengesetzt magnetisierten Stabmagnete zur Signalgabe auch ein Profilmagnet mit einem mittigen Stegteil und zwei verdickten Außenbereichen verwendet wird, bei dem die Außenbereichen schraubenlinienförmig magnetisiert sind und über dessen Steg Sensoren die zwei Feldkomponenten senkrecht zu den Stabachsen erfassen.

Dieser Profilmagnet kann in einer kostengünstigen Ausführungsform aus einem kunststoffgebundenen isotropen Magnetwerkstoff bestehen und durch eine Magnetisieranordnung aus zwei schraubenzieherförmigen Leitern, nämlich einem hinlaufend bestromten Leiter und einem rücklaufend bestromten Leiter, über dem Profil durch einen Stromimpuls magnetisiert werden.

In einer weiteren Ausführungsform können zur Signalgabe vier oder mehr diametral schraubenlinienförmig magnetisierte Stabmagnete verwendet werden, die parallel auf einem Teilkreis um die Sensorachse angeordnet sind.

Zur Erweiterung des erfaßbaren Meßbereiches können bei diesen Verfahrensvarianten mittels elektronischer Sensoren zwei orthogonale Feldkomponenten eines oder mehrerer diametral schraubenlinienförmig magnetisierten Stabmagnete oder entsprechender Profilmagnete detektiert werden, wobei Quotient und absolute Stärke der Feldkomponenten zur Lageerkennung ausgewertet werden, derart, daß der Arcus Tangens aus dem Verhältnis der Feldkomponenten die Feinerfassung der Position und die absolute Feldstärke eine Groberfassung entsprechend der Anzahl der erfolgten Durchgänge von 360° auf 0° ergibt. Hierbei ist es möglich, eine kontinuierliche Zunahme der absoluten Feldstärke durch eine Abnahme des Abstandes von Gebermagneten zu Sensoren, vorzugsweise durch leichtes Kippen von Bewegungsachse und Magnetachse, zu erzeugen.

Eine kontinuierliche Zunahme der absoluten Feldstärke kann in einer abgewandelten Ausführungsform aber auch durch eine Querschnittsveränderung des oder der Gebermagnete über die Magnetachse erzeugt werden.

Eine weitere Verbesserung der Meßergebnisse kann in der oben erwähnten zweiten Verfahrensvariante nach dem nebengeordneten Anspruch 12 weiterhin dadurch erreicht werden, daß mittels zweier Sensoren an zwei Punkten die radialen Feldkomponenten eines diametral schraubenlinienförmig magnetisierten Stabmagneten gemessen werden, daß die beiden Sensoren gekoppelt und parallel zur Mittelachse des stabförmigen Gebermagneten bewegt werden, und daß die Radien von der Magnetachse zu den Sensoren in einem rechten Winkel zueinander stehen.

Schließlich ist es bei beiden Varianten des erfindungsgemäßen Meßverfahrens gemäß Anspruch 14 auch möglich, daß anstelle von diametral schraubenlinienförmig magnetisierten Stabmagneten ein oder mehrere verdrillte Stabmagnete mit quadratischem Querschnitt aus einem anisotropen kunststoffgebundenen elastischem Magnetwerkstoff mit der Magnetisierung senkrecht zur Stabachse eingesetzt werden.

Besonders vorteilhafte Ausführungsbeispiele für das erfindungsgemäße Meßverfahren und die dafür verwendeten Sensorund Magnetanordnungen zur berührungslosen magnetischen Erfassung linearer Relativbewegungen sind in der Zeichnung schematisch dargestellt. Es zeigen

Fig. 1 eine erste Meßanordnung mit überlagertem Diagramm der radialen und axialen Feldkomponenten in ihrem Verlauf,

Fig. 2 eine gegenüber Fig. 1 abgewandelte zweite Ausführungsform einer Meßanordnung ebenfalls mit überlagertem Diagramm,

Fig. 3 eine weitere abgewandelte Ausführungsform einer Meßanordnung mit zwei parallelen Stabmagneten und mit überlagertem Diagramm,

Fig. 4 noch eine weitere Meßanordnung mit zwei parallelen Stabmagneten und mit überlagertem Diagramm,

Fig. 5 eine weitere Ausführungsform eines Stabmagneten mit zwei im Querschnitt verdickten parallelen Außenbereichen mit Magnetisierspule für eine derartige Meßanordnung und

Fig. 6 eine Meßanordnung mit zwei Sensorelementen um einen Stabmagneten aus einem kunststoffgebundenem isotropen Hartferritwerkstoff und mit zugehörigem Diagramm.

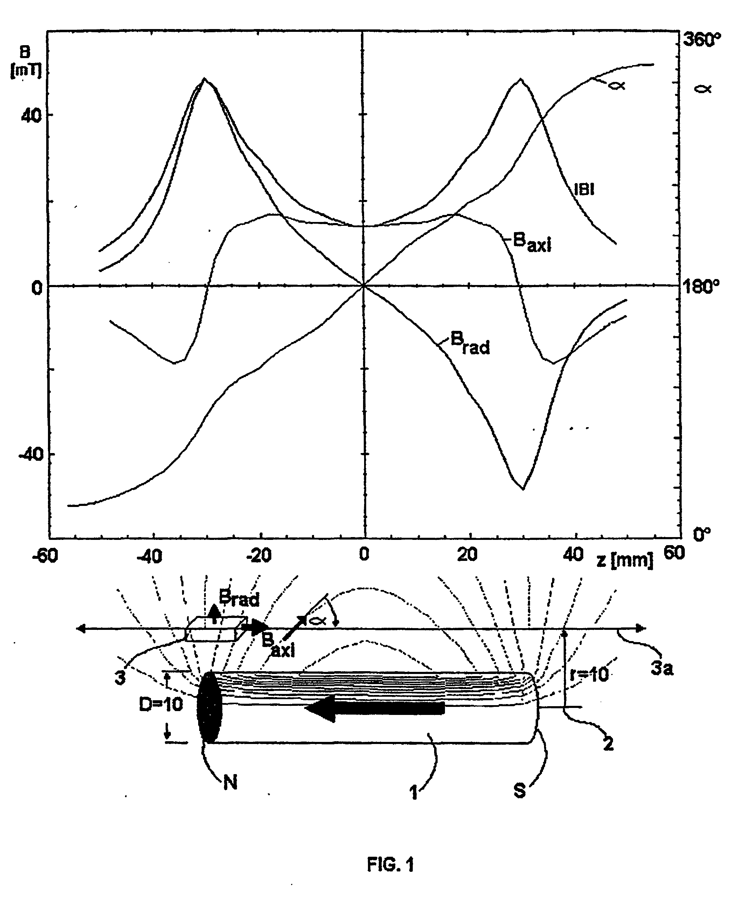

Bei dem in Fig. 1 dargestellten Stabmagneten 1 ist parallel zur Stabachse 2 ein Sensorelement 3 entlang einer Geraden 3a verschiebbar angeordnet, das in dem Beispiel eine radiale Feldkomponente $B_{rad}$ und eine axiale Feldkomponente $B_{axi}$ erfaßt.

Der Stabmagnet 1 hat einen Durchmesser D = 10mm und seine Stabachse 2 befindet sich in einem gleichen radialen Abstand von r = 10mm von dem Sensorelement 3. Im überlagerten Diagramm sind die beiden Feldkomponenten $B_{rad}$ und $B_{axi}$ in ihrem Verlauf gezeigt. Während die radiale Komponente $B_{rad}$ in bekannter Weise zur Lageerkennung zwischen den Polen (im Beispiel über eine Länge von z = 60mm) zur Positionserkennung genutzt werden kann, kann aus der radialen und der axialen Komponente der Winkel Alpha über den Zusammenhang

$$alpha = arc\ tan\ (B_{rad}/B_{axi})$$

bestimmt werden, der über den Bereich zwischen den Polen hinaus eine eindeutige Positionserfassung erlaubt.

Da die beiden Feldkomponenten $B_{rad}$ und $B_{axi}$ durch Temperaturoder Lagetoleranzen in gleicher Weise beeinflußt werden, ist der Quotient der beiden Werte in erster Linie hierdurch nicht verfälscht. Magnetwerkstoffe mit einer magnetischen relativen Permeabilität größer 2 sind für solche Anordnungen besonders geeignet, da der Winkelverlauf relativ gleichmäßig ist. Legierungen aus Al, Ni, Co und Fe (sogenannte AlNiCo-Legierungen) sind daher für dieses Verfahren besonders geeignet.

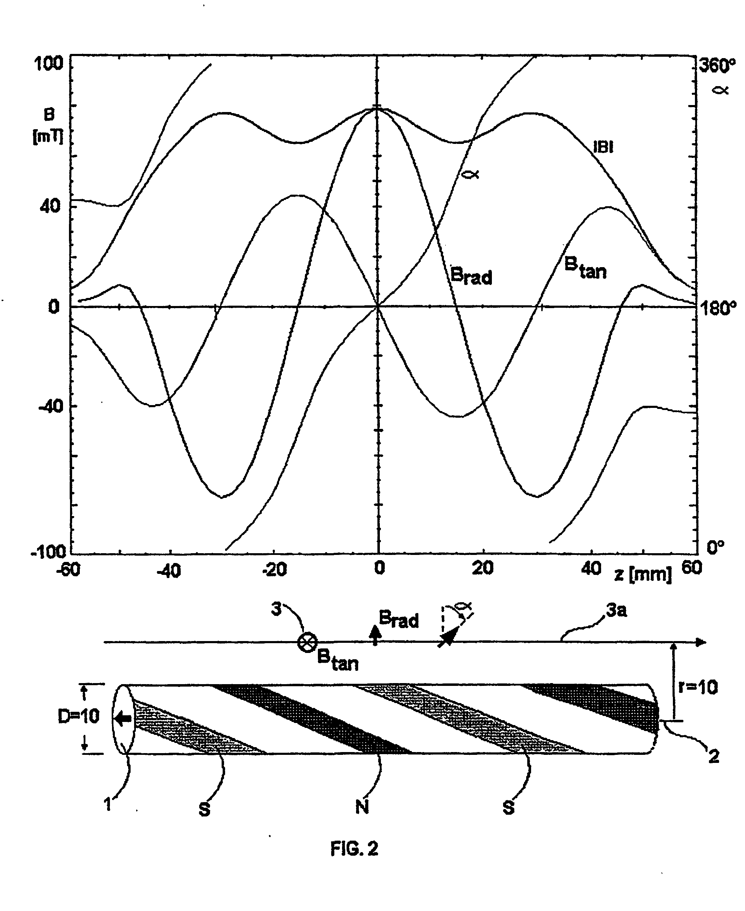

Dieses Verfahren ist gemäß Fig. 2 bis 6 erfindungsgemäß dahingehend weiterentwickelt worden, daß anstelle eines axial magnetisierten Stabmagneten 1 ein oder mehrere Stabmagnete verwendet werden, die eine diametral schraubenlinienförmige Magnetisierung aufweisen, so daß ähnlich wie bei den oben beschriebenen Meßlinealen ein beliebig langer Meßbereich überstrichen werden kann.

Eine solche diametrale Magnetisierung, wie sie bei dem Stabmagneten 1 in Fig. 2 gezeigt ist, wird durch spezielle Magnetisierspulen mit einem schraubenzieherförmigen Stromverlauf in einer Impulsentladung aufgeprägt. Ohne Magnetisierspule kann ein Magnet mit vergleichbarer Charakteristik aus einem elastischen kunststoffgebundenen Stabmagneten mit quadratischem Querschnitt hergestellt werden. Ein solcher Magnet, der quer zur Stabachse magnetisiert ist, läßt sich derart verdrillen, daß eine schraubenlinienförmige Magnetisierung dargestellt ist. Hierdurch lassen sich in einfacher Weise anisotrope Magnetwerkstoffe verwenden.

Einige besonders vorteilhafte erfindungsgemäße Meßverfahren sind in den folgenden Beispielen in Verbindung mit Fig. 2 bis 6 beschrieben.

**Beispiel 1:**

Ein Stabmagnet aus einem kunststoffgebundenen Seltenerdwerkstoff, wie er unter der markenrechtlich geschützten Bezeichnung Neofer 62/60p von der Magnetfabrik Bonn GmbH angeboten wird, mit einer Länge von L = 100mm und einem Durchmesser von D = 10mm ist diametral rechtsdrehend schraubenlinienförmig magnetisiert, wobei Nord- und Südpole (N und S) streifenförmig am Außendurchmesser mit einer Steigung von 60mm pro Umdrehung durch eine entsprechende Magnetisierspule aufgeprägt werden. Im Abstand von r = 10mm von der Stabachse 2 des Rundstabmagneten bewegt sich parallel zur Stabachse ein Sensorelement 3, mit dem eine radiale Feldkomponente $B_{rad}$ und eine darauf senkrecht stehende tangentiale Feldkomponente $B_{tan}$ (in Fig. 2 senkrecht zur Darstellungsebene) gemessen werden. Die beiden Feldkomponenten $B_{rad}$ und $B_{tan}$ sind in Fig. 2 in dem überlagerten Diagramm in Abhängigkeit von der Position gegenüber dem Stabmagneten 1 aufgetragen. Durch diese Anordnung kann nach der obigen Formel über einen Bereich von 60mm die Position aus dem Winkel Alpha zwischen Feldrichtung und radialer Richtung abgeleitet werden.

**Beispiel 2:**

Zwei Stabmagnete 1 aus einem kunststoffgebundenen Seltenerdwerkstoff, wie er unter der markenrechtlich geschützten Bezeichnung Neofer 62/60p von der Magnetfabrik Bonn GmbH angeboten wird, mit einer Länge von L = 100mm und einem Durchmesser von D = 10mm sind diametral rechtsdrehend schraubenlinienförmig magnetisiert, wobei Nord- und Südpole streifenförmig am Außendurchmesser mit einer Steigung von 60mm pro Umdrehung durch eine entsprechende Magnetisierspule aufgeprägt werden. Die beiden Stabmagnete 1 sind im Abstand von d = 20mm parallel zueinander angeordnet derart, daß gleiche Pole sich gegenüberstehen.

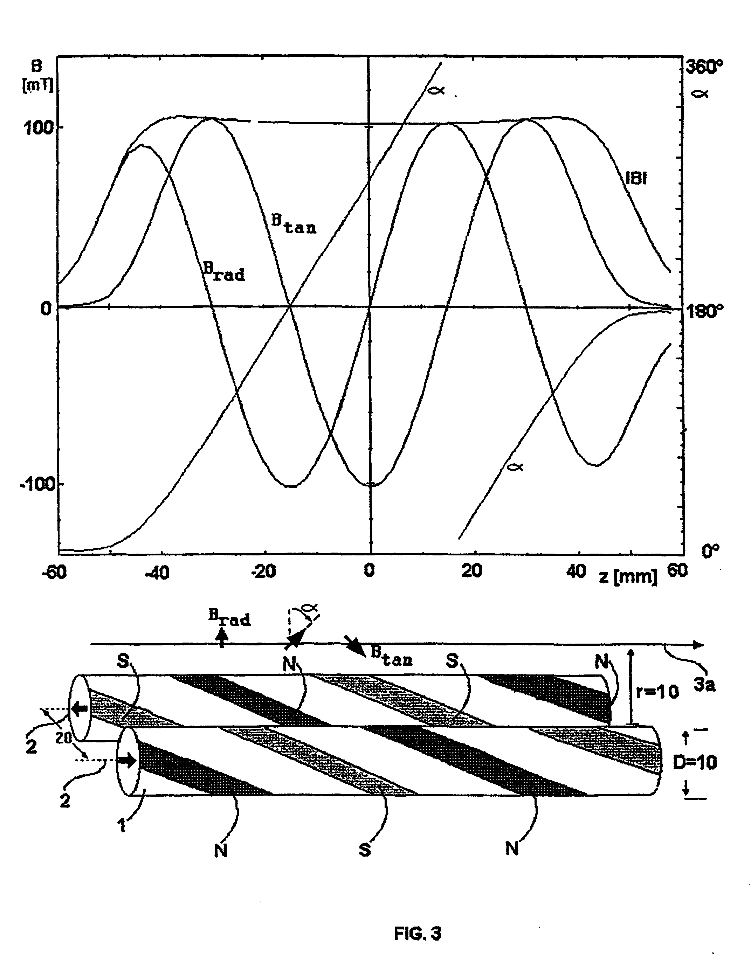

Im Abstand von r = 10mm oberhalb der durch die beiden Stabachsen 2 aufgespannten Ebene und mittig zwischen den Stabmagneten 1 bewegt sich entlang der Geraden 3a parallel zur Stabachse 2 ein Sensorelement 3, mit dem eine radiale Feldkomponente $B_{rad}$ und eine darauf senkrecht stehende tangentiale Feldkomponente $B_{tan}$ (wie in Fig. 2 senkrecht zur Darstellungsebene) gemessen werden. Die beiden Feldkomponenten $B_{rad}$ und $B_{tan}$ sind in Fig. 3 in dem überlagerten Diagramm in Abhängigkeit von der Position des Sensorelementes 3 aufgetragen. Durch diese Anordnung kann über einen Bereich von 60mm die Position aus dem Winkel Alpha zwischen Feldrichtung und radialer Richtung nach der obigen Formel abgeleitet werden.

Im Gegensatz zu Beispiel 1 ergibt sich hierbei eine lineare Abhängigkeit des Winkels Alpha von der Position des Sensorelementes 3.

Werden entsprechend den beiden Stabmagneten 1 unterhalb des beweglichen Sensorelementes 3 zwei weitere Stabmagnete oberhalb des Sensorelementes in gleichem Abstand und mit entgegengesetzter Magnetisierung angeordnet, so erhält man in der Sensorachse Feldwerte doppelter Stärke, die bei leichten Abweichungen von der Sensorachse unverändert bleiben, so daß diese Anordnung besonders unempfindlich gegenüber Lagetoleranzen der Sensoren ist.

**Beispiel 3:**

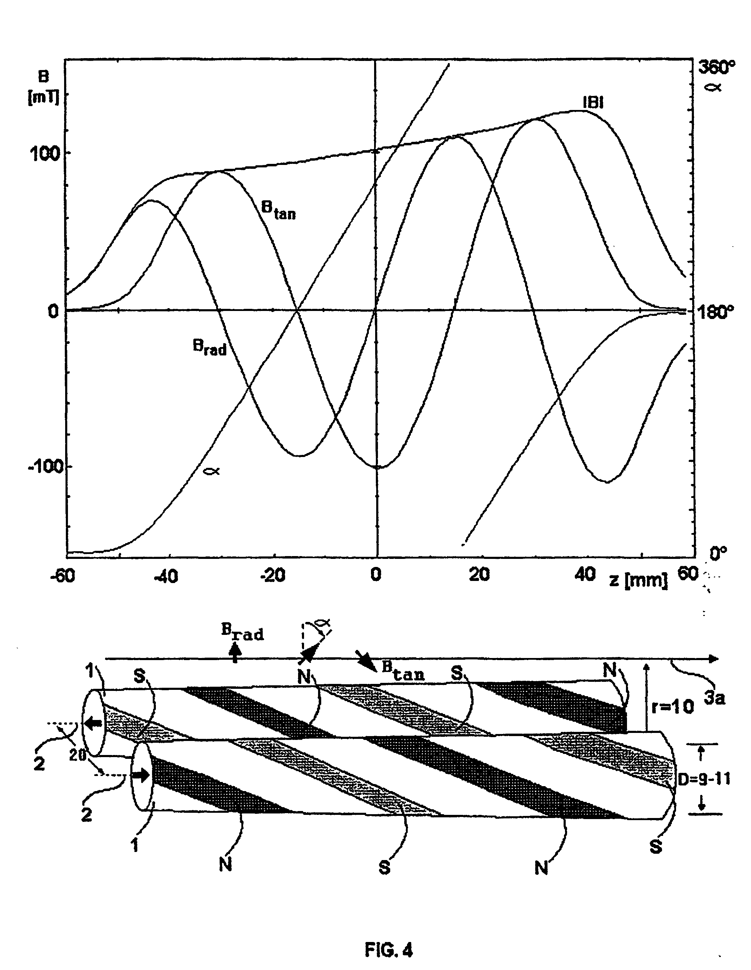

Bei sonst gleichem Aufbau wie beim Beispiel 2 nimmt der Durchmesser der Stagmagnete 1 von einem Ende zum anderen Ende linear von D = 9mm auf D = 11mm zu, so daß die Magnetstäbe eine leicht konische Form haben. In Fig. 4 ist die Anordnung mit den entsprechenden Feldkomponenten $B_{rad}$ und $B_{tan}$ gezeigt.

Diese Anordnung erlaubt zusätzlich zur Bestimmung der Position über den Winkel Alpha eine gröbere Positionsbestimmung über die erfaßte absolute Feldstärke. Durch Berücksichtigung beider Signale kann eine Mehrdeutigkeit ausgeschlossen werden, die sich beim Rückschluß vom Winkel Alpha auf die Lageposition ergibt, wenn ein Bereich größer 60mm überstrichen wird, das heißt wenn die Schraube der Magnetisierung mehr als eine volle Umdrehung beschreibt.

**Beispiel 4:**

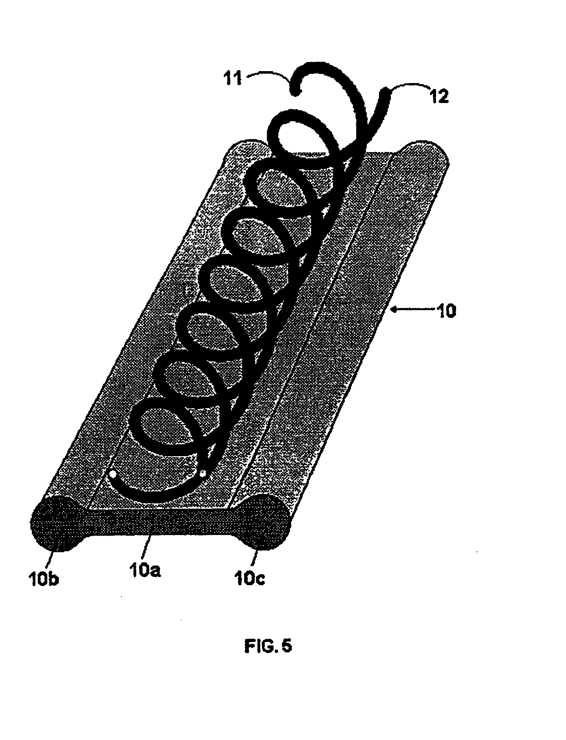

Als kostengünstige Variante zum Beispiel 3 wird ein Profilmagnet 10 aus einem isotropen Werkstoff verwendet, der an den beiden Außenseiten eines mittigen Stegteiles 10a den beiden Stabmagneten von Fig. 3 und 4 vergleichbare Verdickungen 10b und 10c trägt. Durch eine schraubenzieherförmige Magnetisierspule wird ein Stromimpuls aus der Entladung einer Kondensatorbatterie zur Aufmagnetisierung des Profilmagneten 10 genutzt. Die in Fig. 5 gezeigte Anordnung zeigt den Profilmagneten 10 mit einem hinlaufend bestromten Leiter 11 und einem rücklaufend bestromten Leiter 12.

Der Profilmagnet 10 tritt danach an Stelle der zwei Stabmagnete 1 von Fig. 3.

Je nach verwendetem Magnetmaterial ist die absolute Feldstärke gegenüber dem Beispiel 2 verändert, aber der Verlauf entsprechend.

**Beispiel 5:**

Ein Stabmagnet 1 aus einem kunststoffgebundenen isotropen Hartferritwerkstoff, wie er unter der markenrechtlich geschützten Bezeichnung Sprox 3/19p von der Magnetfabrik Bonn GmbH angeboten wird, mit einer Länge von L = 100mm und einem Durchmesser von D = 10mm ist diametral rechtsdrehend schraubenförmig magnetisiert, wobei Nord- und Südpole streifenförmig am Außendurchmesser mit einer Steigung von 60mm pro Umdrehung durch eine entsprechende Magnetisierspule aufgeprägt werden.

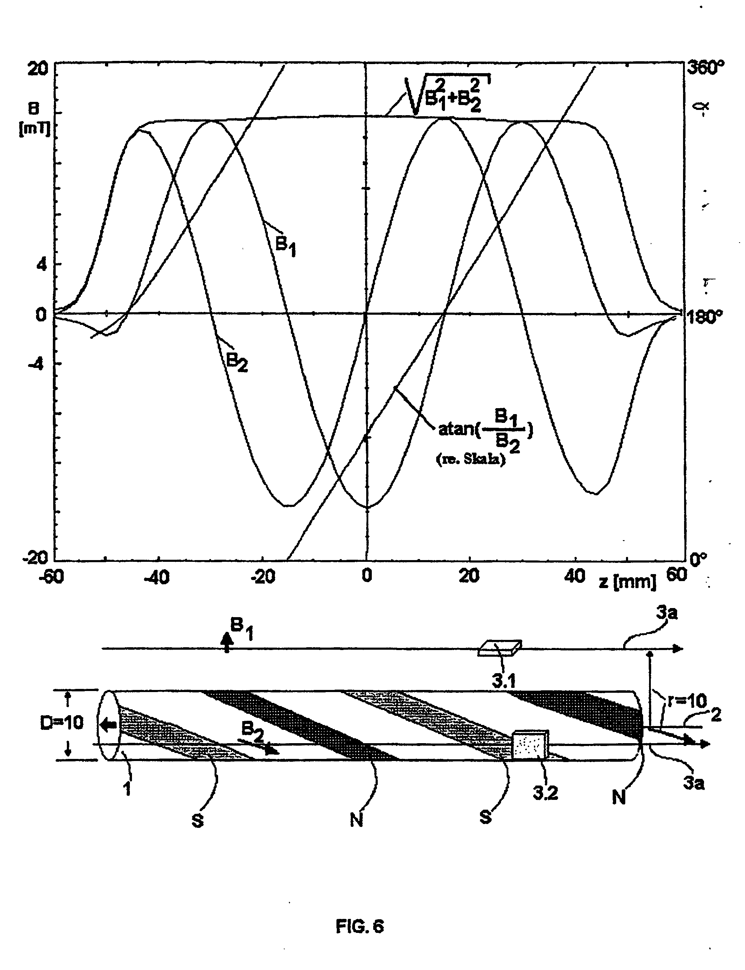

Im gemeinsamen Abstand von r = 10mm von der Stabachse 2 des Rundstabmagneten 1 und auf senkrecht zueinander stehenden Radien bewegen sich gekoppelt parallel zur Stabachse entlang der Geraden 3a zwei Sensoren 3.1 und 3.2, mit denen die radialen Feldkomponenten B1 und B2 senkrecht zueinander gemessen werden. Die beiden Feldkomponenten B1 und B2 sind in Fig. 6 in dem überlagerten Diagramm in Abhängigkeit von der Position aufgetragen. Durch diese Anordnung kann über einen Bereich von 60mm die Position aus dem Winkelverhältnis der gemessenen Feldkomponenten ebenfalls nach der obigen Formel abgeleitet werden.

Liste der Bezugszeichen

| 1 | Stabmagnet |
|---|---|
| 2 | Stabachse |
| 3 | Sensorelement |
| 3.1 | Sensorelement |
| 3.2 | Sensorelement |
| 3a | Gerade |

| 10 | Profilmagnet |
|---|---|
| 10a | Stegteil |
| 10b | Verdickung |
| 10c | Verdickung |
| 11 | hinlaufend bestromter Leiter |
| 12 | rücklaufend bestromter Leiter |

| B | magnetische Flußdichte |
|---|---|
| $B_{rad}$ | radiale Feldkomponente von B |
| $B_{axi}$ | axiale Feldkomponente von B |
| $B_{tan}$ | xtangentiale Feldkomponente von B |

| B1 | xradiale Feldkomponente von B |
|---|---|
| B2 | radiale Feldkomponente von B |

| N | Nordpol |
|---|---|
| S | Südpol |

**Patentansprüche**

1. Meßverfahren zur berührungslosen magnetischen Erfassung linearer Relativbewegungen zwischen Dauermagneten und elektronischen Sensoren mittels einer Sensor- und Magnetanordnung, **dadurch gekennzeichnet, daß** zur Erfassung der linearen Relativbewegungen mittels der elektronischen Sensoren an einem Ort zwei zueinander senkrechtstehende Feldkomponenten erfaßt werden, deren Quotient zur Lageerkennung ausgewertet wird.

2. Meßverfahren nach Anspruch 1, **dadurch gekennzeichnet, daß** zur Signalgabe ein axial magnetisierter Stabmagnet (1) verwendet wird, wobei seitlich davon angeordnete Sensoren die radiale und die axiale Feldkomponente erfassen.

**3.** Meßverfahren nach Anspruch 1 oder 2, **dadurch gekennzeichnet, daß** zur Signalgabe ein Dauermagnet aus einem AlNiCo-Werkstoff verwendet wird.

**4.** Meßverfahren nach Anspruch 1, **dadurch gekennzeichnet, daß** zur Signalgabe ein diametral schraubenlinienförmig magnetisierter Stabmagnet (1) verwendet wird, wobei die seitlich davon angeordneten Sensoren die Feldkomponenten senkrecht zur Stabachse (2) erfassen.

**5.** Meßverfahren nach Anspruch 1, **dadurch gekennzeichnet, daß** zur Signalgabe zwei diametral schraubenlinienförmig entgegengesetzt magnetisierte Stabmagnete (1) verwendet werden, die in einer Ebene parallel zueinander angeordnet sind, über der die Sensoren die Feldkomponenten senkrecht zu den Stabachsen (2) erfassen.

**6.** Meßverfahren nach Anspruch 1, **dadurch gekennzeichnet, daß** zur Signalgabe ein Profilmagnet (10) mit einem mittigen Stegteil (10a) und zwei verdickten Außenbereichen (10b, 10c) verwendet wird, bei dem die Außenbereiche schraubenlinienförmig magnetisiert sind und über dessen Steg Sensoren die zwei Feldkomponenten senkrecht zu den Stabachsen (2) erfassen.

**7.** Meßverfahren nach Anspruch 6, **dadurch gekennzeichnet, daß** der Profilmagnet (10) aus einem kunststoffgebundenen isotropen Magnetwerkstoff besteht und durch eine Magnetisieranordnung aus zwei schraubenzieherförmigen Leitern, nämlich einem hinlaufend bestromten Leiter (11) und einem rücklaufend bestromten Leiter (12), über dem Profil durch einen Stromimpuls magnetisiert wird.

**8.** Meßverfahren nach Anspruch 1, **dadurch gekennzeichnet, daß** zur Signalgabe vier oder mehr diametral schraubenlinienförmig magnetisierte Stabmagnete (1) verwendet werden, die parallel auf einem Teilkreis um die Sensorachse angeordnet sind.

**9.** Meßverfahren nach Anspruch 1 oder einem der Ansprüche 4 bis 8, **dadurch gekennzeichnet, daß** mittels elektronischer Sensoren zwei orthogonale Feldkomponenten eines oder mehrerer diametral schraubenlinienförmig magnetisierten Stabmagnete (1) oder entsprechender Profilmagnete (10) detektiert werden, wobei Quotient und absolute Stärke der Feldkomponenten zur Lageerkennung ausgewertet werden, derart, daß der Arcus Tangens aus dem Verhältnis der Feldkomponenten die Feinerfassung der Position und die absolute Feldstärke eine Groberfassung entsprechend der Anzahl der erfolgten Durchgänge von 360° auf 0° ergibt.

**10.** Meßverfahren nach Anspruch 9, **dadurch gekennzeichnet, daß** eine kontinuierliche Zunahme der absoluten Feldstärke durch eine Abnahme des Abstandes von Gebermagneten zu Sensoren, vorzugsweise durch leichtes Kippen von Bewegungsachse und Magnetachse, erzeugt wird.

**11.** Meßverfahren nach Anspruch 9, **dadurch gekennzeichnet, daß** eine kontinuierliche Zunahme der absoluten Feldstärke durch eine Querschnittsveränderung des oder der Gebermagnete über die Magnetachse erzeugt wird.

**12.** Meßverfahren zur berührungslosen magnetischen Erfassung linearer Relativbewegungen zwischen Dauermagneten und elektronischen Sensoren mittels einer Sensor- und Magnetanordnung, **dadurch gekennzeichnet, daß** zur Erfassung der linearen Relativbewegungen mittels der elektronischen Sensoren an zwei Orten zwei zueinander senkrechtstehende Feldkomponenten erfaßt werden, deren Quotient zur Lageerkennung ausgewertet wird.

**13.** Meßverfahren nach Anspruch 12, **dadurch gekennzeichnet, daß** mittels zweier Sensoren an zwei Punkten die radialen Feldkomponenten eines diametral schraubenlinienförmig magnetisierten Stabmagneten (1) gemessen werden, daß die beiden Sensoren gekoppelt und parallel zur Mittelachse des stabförmigen Gebermagneten bewegt werden, und daß die Radien von der Magnetachse zu den Sensoren in einem rechten Winkel zueinander stehen.

**14.** Meßverfahren nach einem der Ansprüche 1 und 4, 5, 8 bis 11 oder nach den Ansprüchen 12 und 13, **dadurch gekennzeichnet, daß** anstelle von diametral schraubenlinienförmig magnetisierten Stabmagneten (1) ein oder mehrere verdrillte Stabmagnete mit quadratischem Querschnitt aus einem anisotropen kunststoffgebundenen elastischem Magnetwerkstoff mit der Magnetisierung senkrecht zur Stabachse (2) eingesetzt werden.

**Claims**

**1.** Measuring method for non-contact magnetic detection of linear relative movements between permanent magnets and electronic sensors by means of a sensor and magnet assembly, **characterised in that**, to detect the linear relative movements by means of the electronic sensors at one point, two field components at right-angles to one another are detected, and their quotient is used for position detection.

**2.** Measuring method according to claim 1, **characterised in that** an axially magnetised bar magnet (1) is used for signal transmission, with sensors arranged to either side of it detecting the radial and axial field components.

**3.** Measuring method according to claim 1 or 2, **characterised in that** a permanent magnet made of an AlNiCo material is used for signal transmission.

**4.** Measuring method according to claim 1, **characterised in that** a diametrically helically magnetised bar magnet (1) is used for signal transmission, with the sensors arranged to either side of it detecting the field components at right-angles to the bar axis (2).

**5.** Measuring method according to claim 1, **characterised in that** two bar magnets (1) with diametrically opposed helical magnetisation are used for signal transmission, being arranged parallel to one another in a plane over which the sensors detect the field components at right-angles to the bar axes (2).

**6.** Measuring method according to claim 1, **characterised in that** for signal transmission a profile magnet (10) with a central web section (10a) and two thickened outer sections (10b, 10c) is used, in which the outer sections are helically magnetised and over the web of which sensors detect the two field components at right-angles to the bar axes (2).

**7.** Measuring method according to claim 6, **characterised in that** the profile magnet (10) is made of a plastic-bound isotropic magnetic material and is magnetised over the profile by a current pulse, by means of a magnetising assembly of two screwdriver-shaped conductors, namely a conductor (11) fed with inwards current and a conductor (12) fed with return current.

**8.** Measuring method according to claim 1, **characterised in that** for signal transmission four or more bar magnets (1) magnetised diametrically and helically are used, and are mounted parallel on a graduated circle around the sensor axis.

**9.** Measuring method according to claim 1 or any of claims 4 to 8, **characterised in that** by means of electronic sensors two orthogonal field components of one or more bar magnets (1) or corresponding profile magnets (10) magnetised diametrically and helically are detected, with the quotient and absolute strength of the field components being analysed for position detection in such a way that the arcus tangens from the ratio of the field components gives the fine detection of position and the absolute field strength a rough detection according to the number of passes made from 360° to 0°.

**10.** Measuring method according to claim 9, **characterised in that** a continuous increase in absolute field strength is generated by a reduction in the distance between transmitter magnets and sensors, preferably by slight tilting of movement axis and magnet axis.

**11.** Measuring method according to claim 9, **characterised in that** a continuous increase in absolute field strength is generated by a change in cross-section of the transmitter magnet or magnets across the magnet axis.

**12.** Measuring method for non-contact magnetic detection of linear relative movements between permanent magnets and electronic sensors by means of a sensor and magnet assembly, **characterised in that**, to detect the linear relative movements by means of the electronic sensors at two points, two field components at right-angles to one another are detected, and their quotient is used for position detection.

**13.** Measuring method according to claim 12, **characterised in that**, by means of two sensors at two points the radial field components of a bar magnet (1) magnetised diametrically and helically are measured, that the two sensors are coupled and moved parallel to the centre axis of the bar-shaped transmitter magnet, and that the radii from the magnet axis to the sensors are at right-angles to one another.

**14.** Measuring method according to any of claims 1 and 4, 5, 8 to 11 or according to claims 12 and 13, **characterised in that**, instead of bar magnets (1) magnetised diametrically and helically, one or more twisted bar magnets with square cross-section, made from an anisotropic plastic-bound elastic magnetic material with magnetisation at right-angles to the bar axis (2), are used.

## Revendications

**1.** Procédé de mesure pour la détection magnétique sans contact de mouvements relatifs linéaires entre des aimants permanents et des capteurs électroniques, au moyen d'un agencement de capteurs et d'aimants, **caractérisé en ce que** deux composantes de champ, orientées perpendiculairement l'une à l'autre et dont le quotient est évalué pour la reconnaissance de positionnement, sont détectées au moyen des capteurs électroniques, en un point, pour détecter les mouvements relatifs linéaires.

**2.** Procédé de mesure selon la revendication 1, **caractérisé en ce qu'**un barreau magnétique (1) aimanté axialement est utilisé pour la fourniture du signal, des capteurs placés sur le côté de ce barreau détectant les composantes de champ radiale et axiale.

3. Procédé de mesure selon la revendication 1 ou 2, **caractérisé en ce qu'**un aimant permanent en matériau AlNiCo est employé pour la fourniture du signal.

4. Procédé de mesure selon la revendication 1, **caractérisé en ce qu'**un barreau magnétique (1), aimanté diamétralement et de façon hélicoïdale, est utilisé pour la fourniture du signal, les capteurs placés latéralement détectant les composantes de champ perpendiculairement à l'axe (2) du barreau.

5. Procédé de mesure selon la revendication 1, **caractérisé en ce que** deux barreaux magnétiques (1) aimantés de façon opposée, diamétralement et de façon hélicoïdale, et disposés parallèlement l'un à l'autre dans un plan sur lequel les capteurs détectent les composantes de champ perpendiculairement aux axes (2) des barreaux, sont utilisés pour la fourniture du signal.

6. Procédé de mesure selon la revendication 1, **caractérisé en ce qu'**un aimant profilé (10), présentant une âme fixe centrale (10a), au-dessus de laquelle des capteurs détectent les deux composantes de champ perpendiculairement aux axes des barreaux (2), ainsi que deux bords extérieurs (10b, 10c) plus épais et aimantés hélicoïdalement, est utilisé pour la fourniture du signal.

7. Procédé de mesure selon la revendication 6, **caractérisé en ce que** l'aimant profilé (10) est constitué d'un matériau magnétique isotrope combiné à une matière synthétique, et aimanté sur son profil par une impulsion de courant, et par le biais d'une installation de magnétisation composée de deux conducteurs en forme de spire, à savoir un conducteur (11) parcouru à l'aller et un conducteur parcouru (12) au retour.

8. Procédé de mesure selon la revendication 1, **caractérisé en ce que** quatre barreaux magnétiques (1), ou plus, aimantés diamétralement et de façon hélicoïdale, et disposés parallèlement sur un cercle partiel autour de l'axe du capteur, sont utilisés pour la fourniture du signal.

9. Procédé de mesure selon la revendication 1 ou l'une des revendications 4 à 8, **caractérisé en ce que** des capteurs électroniques permettent de détecter deux composantes de champ orthogonales d'un ou plusieurs barreau(x) magnétique(s) (1) aimanté(s) diamétralement et de façon hélicoïdale, ou aimants profilés (10) correspondant, le quotient et la force absolue des composants de champ étant évalués pour la reconnaissance de positionnement, de telle sorte que l'arc tangente issu du rapport des composantes de champ donne la détection fine de la position et de la force absolue de champ produit une détection grossière en fonction du nombre de passages effectués, de 360 ° à 0°.

10. Procédé de mesure selon la revendication 9, **caractérisé en ce qu'**une diminution de l'espacement des aimants transmetteurs par rapport aux capteurs, de préférence par léger basculement de l'axe de mouvement et de l'axe de l'aimant, crée une augmentation continue de la force absolue de champ.

11. Procédé de mesure selon la revendication 9, **caractérisé en ce qu'**une modification de la section transversale du ou des aimant(s) transmetteur(s) crée une augmentation continue de la force absolue de champ sur l'axe de l'aimant.

12. Procédé de mesure pour la détection magnétique sans contact de mouvements relatifs linéaires entre des aimants permanents et des capteurs électroniques, au moyen d'un agencement de capteurs et d'aimants, **caractérisé en ce que** deux composantes de champ, orientées perpendiculairement l'une à l'autre et dont le quotient est évalué pour la reconnaissance de positionnement, sont détectées au moyen des capteurs électroniques, en deux points, pour détecter les mouvements relatifs linéaires.

13. Procédé de mesure selon la revendication 12, **caractérisé en ce que** deux capteurs permettent de mesurer, en deux points, les composantes de champ radiales d'un barreau magnétique (1) aimanté diamétralement et de façon hélicoïdale, **en ce que** les deux capteurs sont couplés et déplacés parallèlement à l'axe médian de l'aimant transmetteur en forme de barreau, et **en ce que** les rayons allant de l'axe de l'aimant vers les capteurs sont disposés à angle droit l'un par rapport à l'autre.

14. Procédé de mesure selon l'une des revendications 1 et 4, 5, 8 à 11 ou selon les revendications 12 et 13, **caractérisé en ce qu'**un ou plusieurs barreau (x) magnétique(s) torsadé(s), possédant une section carrée et composé(s) d'un matériau magnétique élastique, anisotrope, combiné à une matière synthétique, est/sont mis en oeuvre à la place des barreaux magnétiques (1) aimantés diamétralement et de façon hélicoïdale, avec la magnétisation perpendiculaire à l'axe médian du barreau (2).

FIG. 1

FIG. 2

FIG. 3

**FIG. 4**

FIG. 5

FIG. 6